# EUROPEAN PATENT APPLICATION

(11) **EP 1 504 670 A1**
(43) Date of publication of application: **09.02.2005**
(21) Application number: 04380161.2
(22) Date of filing: 22.07.2004
(51) Int. Cl.: A23F 5/14, A23L 1/302, A23L 1/304, A23L 1/30, A23L 1/05, A23L 2/39

(54) **Procedure improvement for the production of a coffee food preparation**

(30) Priority: 04.08.2003 ES 200301874
(71) Applicant: Union Tostadora, S.A., Logrono 2606 (ES)
(72) Inventor: Garcia-Abril Abad, Federico, Logrono (La Rioja) 2606 (ES); Flores Arnaiz, Jesus Guillermo, Logrono (La Rioja) 2606 (ES)
(74) Representative: Maldonado Jordan, Julia

(57) **Abstract**

Improvements in the production procedure of a coffee-based food preparation, characterized by the preparation of a pre-blend based on a vitamin complex and a mineral complex in a ratio of 1:3, by adding soluble fibre to this pre-blend and subjecting it to blending in a ratio of 4:70, adding ground coffee to this result, blending it all in the mixer, and transferring the result to a feeding hopper for subsequent packaging.

## Description

### OBJECT OF THE INVENTION

The improvement in the procedure comprises the preparation of a vitamin complex and a mineral complex pre-blend according to a set weight ratio that will serve for the subsequent mixing with soluble dietetic fibre in another set ratio. A ground coffee blend shall be added to the obtained pre-blend, either natural, roasted, or decaffeinated, and blended in a mixer, based on the system developed by Patent 9800054.

A particularly new tasting, and high quality product is obtained with this new development.

This is the object of the improvement: the seek for a food product that combines the provision of greater nutrition with a particularly improved and refined taste.

Coffee is a stimulating, low-nutrient drink. In order to achieve an improved nutritional value, vitamin and mineral complexes are added together with dietetic soluble fibres, in set weight ratios and appropriate dissolution times.

### TECHNICAL FIELD OF THE INVENTION

The present improvement in the development of the procedure, protected by Patent 9800054 is framed within the field of coffee industry, obtaining a food preparation based on coffee that is used as complement to the diet, since it is soluble in water and presents an appropriate stability at temperatures of 100 to 120°C.

### PRIOR ART

Patent 9800054 described a procedure for the production of a food preparation based on coffee. Said procedure consisting of:
a) Preparation of a pre-blend, of a vitamin complex, of a mineral complex and soluble fibre according to a weight ratio of 1:2, 5:70 respectively during 2 hours.
b) Addition of ground coffee to the pre-blend of the previous point, performing this blending in the mixer (1), according to a weight proportion of 1:1,7, respectively.
c) The contents inserted in the mixer(1) fall into a feeding hopper (2), which is connected to the ground coffee (3) silo, and by means of an electronic system the 20% enriched blend is measured-out on the ground coffee.

Though there are existing products that are blended with the coffee in order to provide stimulating or energizing effects, such as ginseng or "guarana", the preparation of coffee blends with components that improve their dietetic effect based on mineral, vitamin and soluble fibre complexes in set weight ratios, was not known until Patent 9800054.

Research remained open in order to be able to improve the respective preparations.

### DETAILED DESCRIPTION OF THE INVENTION

Wishing to improve the food preparation developed by Patent 9800054, recent researches carried out, have resulted in the modification of the pre-blended concentrations, regarding the amounts of solute there is in a given amount of solution or solvent affecting the weight percentage. The dissolution rate has also been modified, adjusting it to the blending time.

Based on this, the product has been able to be improved with better taste and optimizing its nutritional value.

Consequently, the procedure allows the obtention of an improved food preparation, based on coffee, a vitamin complex, soluble fibre and mineral complex.

The procedure commences with the blending of the two complexes, the vitamins and the minerals, in a mixer, under a weight ratio of 1:3.

The dietetic fibre is blended in a second phase. Given the different granulometry, the blending time must not be less than 2:15 hours with a blending ratio of 4:70.

The vitamin complex comprises the following vitamins:
- vitamin A
- vitamin B1, B2, B3, B6, B9, B12
- vitamin C
- vitamin D
- vitamin E
- biotin and pantothenic Acid

The mineral complex is made up of:
- Calcium
- Phosphorus
- Iron
- Magnesium
- Zinc

Ground coffee is now added to the pre-blend obtained in this manner, carrying out this blending in mixer (1), according to the weight ratio of 1:1,7 respectively.

The coffee is natural, though it can also be toasted o decaffeinated.

The mixer described in Patent 9800054 is used, which, as is already known, consists of an inverted frustum of cone container equipped internally with a blending worm which has been provided with a rotational and another orbital movement, making it move along all the length of the generatrix, thus forcing the coffee to be inter-blended continuously and blended with the rest of the ingredients.

The product obtained in this manner is poured on an already known, measuring-out hopper, which is constructed with an extraction worm on its bottom, activated by a motor reducer, governed electronically, with an output connected to the transportation system of the blended coffee, from the silos to the packaging machine.

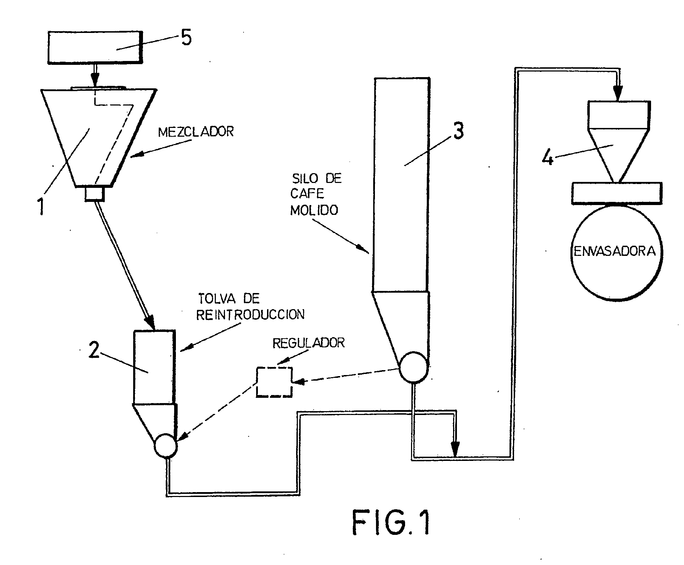

### BRIEF DESCRIPTION OF THE FIGURE

The enclosed figure corresponds to that of Patent 9800054 that is used for carrying out the improvement of the procedure and in which all the food preparation obtention phases are performed.
1.- Mixer
2.- Reinsertion hopper
3.- Silo of ground coffee
4.- Packaging machine
5.-Pre-blender

### EMBODIMENT OF THE INVENTION

It is intended to modify and perform a new development as regards what is claimed in Patent 9800054, modifying the concentration of the pre-blends and the process times.

The improved food preparation, based on coffee, applicable as a dietetic complement, is constituted as from an amount of ground natural or toasted, coffee or decaffeinated coffee, to which soluble fibre shall be added, configured as an association of purified and atomized acacia fibres which, among other actions, have an active bifid effect, regulating the intestines and improving the assimilation of nutrients. Subsequently, a vitamin complex and a mineral complex is added.

A preliminary pre-blending phase is carried out (1), during which the vitamin complex and the mineral complex are blended during 20 minutes in a ratio of 1:3

In a second pre-blending phase, the vitamin-mineral complex and the fibre is blended during 2:15 hours in a ratio of 4.70.

The thus obtained pre-blend is introduced in the mixer (1) together with the ground coffee in a weight ratio of 1:1,7, that is to say, 1,7 ground coffee per pre-blend unit.

The contents introduced in the mixer (1) fall inside a feeding hopper (2) which is connected to the ground coffee silo (3), and by means of an electronic system, the 20% enriched blend is measured-out on the ground coffee.

The product obtained in this manner is sent to the packaging machine (4).

## Claims

1. Procedure improvements for the production of a coffee-based food preparation, that consists of a mixer, re-introduction hopper, ground coffee silo, packaging machine and pre-blender, that is essentially **characterised by** the following operations:
a) A vitamin complex is prepared, made up of vitamins: vitamin A; vitamin B1, vitamin B2; vitamin B3; vitamin B6; vitamin B9; vitamin B12; vitamin C; vitamin D; vitamin E; biotin and Pantothenic Acid, and the mineral complex is made up of: Calcium, Phosphorus, Iron, Magnesium and Zinc, in a ratio of 1:3, blending during 20 minutes.
b) In a second pre-blending phase, the vitamin-mineral complex of phase (a) is blended during 2:15 hours with the soluble fibre in a ratio of 4:70.
c) the pre-blend obtained in phase (b) is introduced in the mixer (1) together with the ground coffee in the weight ratio of 1:1,7, that is to say, 1,7 ground coffee per pre-blend unit.
d) The contents introduced in the mixer (1) fall inside a feeding hopper (2), which is connected to the ground coffee silo (3), and by means of an electronic system the 20% enriched blend is measured-out on the ground coffee, and subsequently sent to the packaging machine (4).
